(19) **Europäisches Patentamt European Patent Office Office européen des brevets**

(11) **EP 4 305 003 B1**

(12) **EUROPEAN PATENT SPECIFICATION**

(45) Date of publication and mention
of the grant of the patent:
**27.11.2024 Bulletin 2024/48**

(21) Application number: **22704806.3**

(22) Date of filing: **11.02.2022**

(51) International Patent Classification (IPC):
*C04B 33/04* (2006.01)     *C04B 35/626* (2006.01)
*C04B 35/632* (2006.01)     *B01J 2/00* (2006.01)

(52) Cooperative Patent Classification (CPC):
**C04B 35/62625; B01J 2/00; C04B 33/04;**
**C04B 35/62695; C04B 35/632;** C04B 2235/5436;
C04B 2235/604; C04B 2235/608

(86) International application number:
**PCT/IB2022/051240**

(87) International publication number:
**WO 2022/189870 (15.09.2022 Gazette 2022/37)**

(54) **PROCESS AND PLANT FOR PREPARING A GRANULATE FOR CERAMIC USE**

VERFAHREN UND ANLAGE ZUR HERSTELLUNG EINES GRANULATES FÜR KERAMISCHE
ZWECKE

PROCÉDÉ ET INSTALLATION DE PRÉPARATION D'UN GRANULÉ À USAGE CÉRAMIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.03.2021 IT 202100005882**

(43) Date of publication of application:
**17.01.2024 Bulletin 2024/03**

(73) Proprietor: **Green Tech Engineering S.r.l.**
**28100 Novara (IT)**

(72) Inventor: **MANFREDINI, Alessandro**
**deceased (IT)**

(74) Representative: **Corradini, Corrado et al**
**Ing. C. Corradini & C. S.r.l.**
**Via Dante Alighieri 4**
**42121 Reggio Emilia (IT)**

(56) References cited:
**EP-A1- 3 640 227       WO-A1-2011/117717**
**WO-A1-2020/065512**

Remarks:
The file contains technical information submitted after
the application was filed and not included in this
specification

**Description**

Technical Field

The present invention relates to a process and a plant for preparing a ceramic granulate, which is mainly intended to be used in the production of ceramic products, such as slabs or wall and floor tiles.

Background

It is well known that the production of ceramic products begins with the choice of raw materials, which generally include clay components of various mineralogical constitution to which inert materials and/or melting materials, such as quartz sand and feldspars, may eventually be added.

These ceramic raw materials are then subjected to a series of mechanical operations aimed at reducing their initial dimensions, in order to obtain a ceramic granulate with a determined average particle diameter and a particle size suitable for the product to be obtained.

The granulate thus obtained is then subjected to a forming step, for example by pressing, extrusion, casting or other processes, which makes it possible to obtain a semi-finished product having a certain geometric shape.

After possible decoration steps, this semi-finished product undergoes a firing step that transforms the raw materials of the granulate into new crystalline and/or glassy compounds, giving the product thus obtained particular chemical/physical properties, including the solidity and mechanical resistance necessary to maintain its shape.

As part of this general system, one of the most widespread techniques currently used to prepare ceramic granulate is the one involving wet grinding of the raw materials and subsequent spray drying thereof (atomization).

In particular, this technique requires that the raw materials are wet ground in special rotary mills until a liquid and viscous mixture is obtained, commonly called slip. The slip produced in this way is then introduced in special spray dryers, called atomizers, which are able to produce a homogeneous powder with constant humidity, called atomized, ready for the subsequent processing steps.

Another technique that is commonly used for preparing ceramic granulate is the one that includes a dry grinding of the raw materials and their subsequent agglomeration.

In particular, this technique provides that the raw materials are dry ground in special mills, possibly by successive reduction stages, until a micronized powder having an almost negligible degree of humidity is obtained. This ceramic powder is then subjected to an agglomeration step, for example through a wet granulation process, whereby the ceramic powder particles are made to adhere to each other to obtain larger particles or granules.

Specifically, the wet granulation process involves wetting the ceramic powder, previously obtained by dry micronization, and subsequent drying of the granulate thus obtained, in order to reach a predefined level of humidity suitable for the subsequent forming steps.

As an alternative to wet granulation with drying, suitable granulators have been devised which, thanks to extremely accurate systems for dosing the incoming micronized powder and for measuring the humidity level, are able to mix the particles of said micronized powder with a homogeneous and constant quantity of water and possibly water-soluble binders and/or additives, producing granules with a morphology similar to an agglomerate of fine particles, such as to increase the apparent density of the micronized powders and to facilitate the subsequent processing steps.

Compared to the wet grinding technique with slip atomization, the agglomeration of the micronized powder obtained by dry grinding has several advantages, including a marked reduction in electrical and thermal consumption, reduced greenhouse gas emissions, marginal water consumption and a strong reduction in the chemical additives normally used in the processing steps (e.g. deflocculants, tenacifiers or others). On the other hand, it is well known that agglomerated ceramic powders generally contain a higher percentage of air than an atomized one, which in many cases leads to greater difficulties in pressing both in terms of production and quality.

For example, the greater quantity of air can lead to: lower press output, higher raw waste, difficulty in obtaining large dimensions due to non-uniform distribution of the powder inside the mould cavity, surface defects caused by the presence of fine powder not properly agglomerated and with lower humidity than expected.

In an attempt to overcome these drawbacks, patent application EP 3 402 590 A1 describes a process for granulating ceramic powder previously obtained by dry micronization, the objective of which is to produce a granulate with a reduced air presence, high fluidity and a reduced percentage of fine particles lower than 100 micrometres.

More specifically, this is a dry granulation process comprising a step of preparing the micronized ceramic powder, a step of compacting the micronized powder to obtain at least one compacted element, and finally a step of crushing the compacted element, to obtain a granulated material having a predefined particle size.

In particular, the process described in EP 3 402 590 A1 envisages that the step of compacting the micronized ceramic powder is performed using only a compression action, during which the ceramic powder is subjected to a pressure value not lower than 100 Kg/cm$^2$.

However, the pressure value to which the micronized ceramic powder must be subjected, in order to ensure an adequate level of quality and effectiveness of the compaction step, is not a constant but depends on many characteristics of the powder, including particle size, apparent density and the degree of cohesion of the specific raw materials that make it up.

In several cases it may therefore happen that the above mentioned peculiar characteristics imply the need to exert a very high compaction pressure, higher than 400 Kg/cm$^2$, which drastically reduces the production capacity and efficiency of the compaction step, increasing at the same time the quantity of waste product that is not properly compacted. EP 3 640 227 A1 discloses a process for preparing a ceramic granulate.

Disclosure of the invention

An object of the present invention is to overcome or at least significantly reduce the aforementioned drawback of the prior art, by making available a solution that allows efficient granulation of dry ground ceramic powders, while using lower compaction pressures than those required to implement the method described in EP 3 402 590 A1.

A further object of the present invention is to achieve the above-mentioned objective within the scope of a simple, rational and relatively low cost solution, which can also be flexible and adaptable to the various peculiar characteristics that micronized ceramic powders may present depending on a different composition of the raw materials. These and other objects are reached thanks to the characteristics of the invention as set forth in the independent claims. The dependent claims outline preferred and/or particularly advantageous aspects of the invention but not strictly necessary for the implementation thereof.

The invention makes available a process for preparing a ceramic granulate according to claim 1.

Thanks to the aforementioned wetting step, it is advantageously possible to increase the humidity and density of the dry ground ceramic powder, obtaining an agglomerated product which can be effectively compacted using a comparably lower compaction pressure than the one that would be required to compact the same ceramic powder under a dry condition.

As a result, the wetting step significantly increases the production capacity and the efficiency of the compaction step, at the same time decreasing the quantity of waste product that would otherwise not be adequately compacted.

The introduction of this wetting step therefore allows the process according to the invention to obtain a ceramic granulate with reduced presence of air and high flowability as part of a more efficient and productive solution than the prior art represented by patent application EP 3 402 590 A1.

According to an aspect of the present invention, the ceramic raw materials from which the starting ceramic powder is obtained may comprise at least one clay component or a plurality of clay components having a different mineralogical constitution.

In this way, by varying the number, type and/or percentage quantities of each clay component, it is advantageously possible to produce ceramic granulates with different characteristics, for example according to the specific ceramic product to be made. According to another aspect of the invention, the ceramic powder obtained from the grinding step may possess one or more of the following characteristics:

- having a humidity lower than or equal to 5%, e.g. comprised between 0.5% and 5% (extremes included),
- having an apparent density comprised between 0.4 and 0.8 g/cm$^3$ (extremes included),
- including a quantity of particles having dimensions lower than 45 micrometres greater than or equal to 50% of the total weight of the ceramic powder, for example higher than or equal to 65% of said total weight, and
- including a quantity of particles having dimensions higher than 400 micrometres lower than or equal to 1% of the total weight of the ceramic powder. (In the ceramic sectors of refractories, pressed tiles, and pressed bricks, the percentage above 400 micrometres may increase).

Each of these features has the advantage of making the subsequent processing steps more effective, allowing to obtain a ceramic granulate characterized by a further reduced presence of air and optimal flowability.

In addition, the particle size spectrum indicated above also has the advantage of favouring sintering processes during the firing step of ceramic products.

Of course, within the ranges provided, the values of the various characteristics may vary.

For example, the particle size spectrum may vary depending on the characteristics of the raw materials, the characteristics of the subsequent processing steps and the type of product to be made.

The apparent density may similarly vary depending on the characteristics of the raw materials and the desired particle size.

According to another aspect of the invention, the liquid substance used in the wetting step may include water and possibly water-soluble binders and/or additives (e.g. CMC, starch, lignite, boric acid, SIL60, etc.), which are preferably in quantities lower than 1% of the total weight of the solution.

The use of a water-based solution has the advantage of increasing the cohesion of the ceramic powders, while limiting the environmental impact of the process.

Another aspect of the invention provides that the agglomerated product obtained by the wetting step may possess one or more of the following characteristics:

- having a humidity comprised between 5% and 10% (extremes included),
- having an apparent density comprised between 0.45 and 0.85 $g/cm^3$,
- including a quantity of particles having dimensions lower than 45 micrometres comprised between 30% and 60% of the total weight of the agglomerated product (extremes included),
- including a quantity of particles having dimensions higher than 400 micrometres comprised between 15% and 43% of the total weight of the agglomerated product.

Each of these features has the advantage of making the subsequent compaction step, and therefore the entire process, more effective and productive.

According to one aspect of the present invention, the compaction pressure that is applied to the agglomerated product during the compaction step may be lower than or equal to 400 $Kg/cm^2$, for example comprised between 100 and 400 $Kg/cm^2$ (extremes included).

In this way, the compaction step can be carried out by means of technical equipment and in a relatively simple way, which makes it particularly efficient and productive. According to a preferred aspect of the invention, the process may further comprise at least a step of sieving the ceramic granulate in order to separate from the same the coarse particles, i.e. particles having a maximum dimension (e.g. diameter) greater than a predetermined value, for example greater than 800 micrometres.

Thanks to this solution, it is advantageously possible to supply a ceramic granulate having a relatively narrow particle size spectrum and few coarse particles.

In this context, one aspect of the invention provides that the process may further comprise a step of reconveying said coarse particles to the crushing step.

In this way, coarse particles that do not meet the required specifications can be efficiently returned to the production cycle, reducing production waste.

According to the invention, the process also comprises a step of inertial separation of the ceramic granulate in order to separate from the same the fine particles, i.e. particles having maximum dimensions (e.g. diameter) lower than a predetermined value, for example lower than 100 micrometres.

Thanks to this solution it is advantageously possible to supply a ceramic granulate with a low presence of fine particles.

In this case, one aspect of the invention provides that the process may further comprise a step of reconveying said fine particles to the wetting step, for example by first combining them with ceramic powder.

In this way, fine particles that do not meet the required specifications can be efficiently returned to the production cycle, reducing production waste.

In general terms, one aspect of the present invention provides that the ceramic granulate obtained by the process outlined above may possess one or more of the following characteristics:

- having a humidity comprised between 5% and 10% (extremes included),
- having a compression ratio comprised between 1.8 and 2.1 (extremes included),
- having an apparent density comprised between 0.85 and 1.1 $g/cm^3$ (extremes included),

- including a quantity of particles having dimensions lower than or equal to 100 micrometres lower than or equal to 10% of the total weight of the ceramic granulate,
- including a quantity of particles having dimensions greater than or equal to 600 micrometres lower than or equal to 20% of the total weight of the ceramic granulate,
- having an angle of repose comprised between 30° and 40° sexagesimal (extremes included).

Each of these characteristics has the advantage of making ceramic granulate particularly suitable for use in the production of ceramic products, mainly through the usual forming (e.g. pressing, extrusion, casting, etc.) and firing steps.

Another embodiment of the present invention finally makes available a plant for preparing a ceramic granulate, which comprises:

- means for dry grinding ceramic raw materials to obtain a ceramic powder, for example a micronized ceramic powder,
- means for wetting said ceramic powder with at least one liquid substance to obtain an agglomerated product,

- means for compacting said agglomerated product by applying a compaction pressure to obtain at least one compacted element,
- means for crushing said compacted element to obtain ceramic granulate.

This embodiment achieves essentially the same advantages as the corresponding process, in particular that of increasing the efficiency of the compaction step and consequently the productivity of the entire system.

All ancillary aspects of the invention, which have already been outlined in relation to the process, are of course also applicable *mutatis mutandis* to the corresponding plant.

In particular, the plant may comprise means for sieving the ceramic granulate, placed downstream of the crushing means, to separate the coarse particles from the ceramic granulate, i.e. particles having a maximum dimension (e.g. diameter) greater than a predetermined value, for example greater than 800 micrometres, as well as possible means for reconveying said coarse particles back to the crushing step.

The plant may also comprise means for inertial separation of the ceramic granulate, placed downstream of the crushing means and possibly of the sieving means, to separate from the ceramic granulate the fine particles, that is particles having maximum dimensions (e.g. diameter) lower than a predetermined value, for example lower than 100 micrometres, as well as possible means for reconveying said fine particles to the wetting step, for example by previously combining them to the ceramic powder.

Brief description of the drawings

Further features and advantages of the present invention will become more apparent from the description of a preferred, but not exclusive, embodiment of a process and a plant, illustrated only by way of non-limiting example in the accompanying drawings, in which:

figure 1 is a schematic view of a plant for preparing ceramic granulate according to an embodiment of the invention;

figure 2 schematically illustrates the details of a possible execution of the ceramic powder feeding, wetting and densification system according to the invention;

figure 3 schematically illustrates the details of a possible execution of the compaction system of humidified ceramic powders according to the invention;

figure 3B is a schematic and merely illustrative view of section B-B shown in figure 3; figure 4 schematically illustrates the details of a possible execution of the compacted product crushing system according to the invention;

figure 5 schematically illustrates the details of a possible execution of the crushed product sieving system according to the invention;

figure 6 schematically illustrates the details of a possible execution of the inertial separation system of the fine particles from the crushed and sieved product according to the invention;

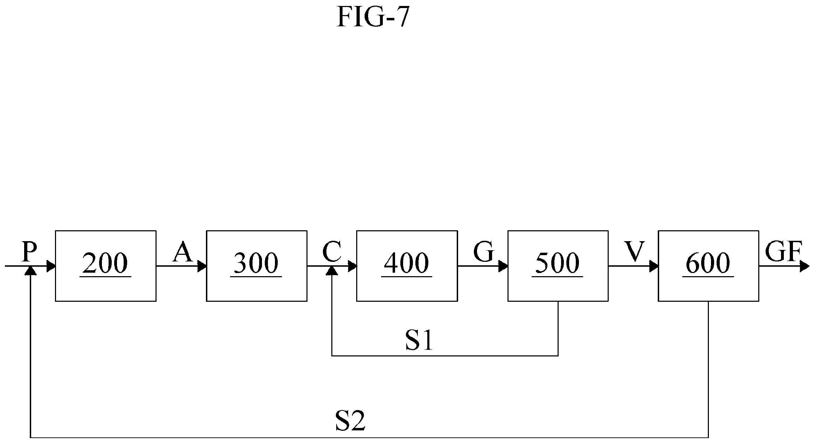

figure 7 is a block diagram schematically illustrating the process steps according to the invention.

Detailed description

With particular reference to the aforementioned figures, a process for preparing a ceramic granulate particularly suitable for preparing ceramic products such as slabs and/or wall and floor tiles, as well as a plant 100 especially suitable for implementing the aforementioned process are described below.

In this regard, however, it should be specified that the process could also be implemented with plants 100 different from those illustrated in the figures.

The process first involves preparing a mix of ceramic raw materials.

This mix of ceramic raw materials may comprise at least one clay component or a plurality of clay components having a different mineralogical constitution.

For example, each of these clay components may be chosen from the arrangement consisting of: kaolinite clay, illite clay, montmorillonite clay and chlorite clay.

By varying the number, type and/or percentage quantities of each clay component, it is advantageously possible to produce a ceramic granulate with different characteristics, for example according to the specific product to be made.

In general, the percentage by weight of the clay component in the raw material mix can vary in the range comprised between 20% and 100% (extremes included), for example by taking into account the characteristics of the subsequent processing steps and the type of ceramic product to be made.

The mix of ceramic raw materials may possibly also include inert materials and/or melting materials, such as quartz sand and feldspars.

This does not exclude the recovery of secondary raw materials (processing waste and powder recovery from the filtering systems), the presence of which can vary in the range comprised between 5% and 100% (extremes included), for example by taking into consideration the characteristics of the subsequent processing steps and the type of ceramic product to be made.

This mix of ceramic raw materials is then subjected to a dry grinding step, aimed at reducing the dimensions thereof, until a ceramic powder P is obtained, for example a micronized ceramic powder, i.e. with particles having an average dimension lower than 100 micrometres.

It should be here specified that, in the context of the present discussion, the dimension of a particle or of a granule is generally intended as its maximum linear dimension, which can be, for example, assimilated to the maximum diameter in the case of substantially spherical particles/granules or to the greater diagonal in the case of substantially prismatic particles/granules.

In particular, the ceramic powder P obtained at the end of the grinding step may include a quantity of particles having dimensions lower than 45 micrometres greater than or equal to 50% of the total weight of the ceramic powder P, for example greater than or equal to 65% of said total weight.

Particles having dimensions comprised between 45 micrometres and 63 micrometres (extremes included) may be present in the ceramic powder P in a weight percentage comprised between 1% and 15% of its total weight (extremes included).

The ceramic powder P may possibly also contain particles having dimensions higher than 100 micrometres but in smaller and generally decreasing percentages.

In particular, the ceramic powder P may contain a quantity of particles having dimensions comprised between 400 and 600 micrometres (extremes included) comprised between 0% (absence) and 1% (extremes included) of the total weight.

Further, the ceramic powder P may be substantially free of particles having dimensions greater than 600 micrometres.

A specific example of the particle size distribution of ceramic powder P is given in Table 1 below:

Table 1

| Particle dimensions | % by weight in dry ground powder P |
| --- | --- |
| >2000 $\mu$m | 0 |
| 1400-2000 $\mu$m | 0 |
| 1250-1400 $\mu$m | 0 |
| 1000-1250 $\mu$m | 0 |
| 800-1000 $\mu$m | 0 |
| 600-800 $\mu$m | 0 |
| 500-600 $\mu$m | 0 |
| 400-500 $\mu$m | 0 - 1 |
| 31 5-400 $\mu$m | 0 - 2 |
| 250-31 5 $\mu$m | 0 - 4 |
| 200-250 $\mu$m | 0 - 5 |
| 150-200 $\mu$m | 0 - 15 |
| 100-150 $\mu$m | 0 - 25 |
| 63-100 $\mu$m | 0 - 40 |
| 45-63 $\mu$m | 1 - 15 |
| <45 $\mu$m | 50 - 99 |

Within the values indicated above, the particle size spectrum of the ceramic powder P may vary depending on the characteristics of the raw materials, the characteristics of the subsequent processing steps and the type of product to be made.

The ceramic powder P obtained at the end of the dry grinding step may also have an apparent density comprised between 0.4 and 0.8 g/cm$^3$ (extremes included).

It should be here specified that the apparent density of a granular or powdered material represents the density of such material considering also the inter- and intra-particle spaces. It may be calculated as the ratio between the mass of a quantity of said granular or powdered material and its apparent volume, e.g. the volume that said quantity of material occupies when it is poured slowly and without compression into a graduated container.

This parameter may also vary, within the expected range, depending on the characteristics of the raw materials and the desired particle size.

Finally, the ceramic powder P obtained at the end of the dry grinding step may have a humidity lower than or equal to 5%, for example comprised between 0.5% and 5% (extremes included).

It should be here specified that, in the context of this discussion, humidity of a material refers to the percentage by weight of water contained in a sample of that material, compared to the total weight of the sample.

This percentage can then be calculated using the following formula:

$$ humidity \ (\%) = \left( \frac{P - P'}{P} \right) * 100 $$

where P is the total weight of the sample and P' is the weight of the same sample after a step of complete dehydration.

In order to perform the dry grinding, the plant 100 may comprise a single grinding apparatus or a sequence of grinding apparatuses suitable for subjecting the ceramic raw materials to a progressive dimension reduction, for example a pre-crushing, a crushing and finally a micronization.

At least the final portion of the dry grinding step, such as micronization, may be performed by means of a mill, such as a peg mill, a rotary ring mill, a pendular mill, a vertical roller mill, or a discontinuous or continuous cylindrical ball mill.

All of these mills are per se known and are therefore neither illustrated nor described in detail.

However, it should be specified that, in some embodiments, the grinding apparatuses may belong to a plant that is separate and independent of the plant 100, which may simply receive the already dry ground ceramic powder P as an input.

In any case, the dry grinding step is performed by loading and grinding the ceramic raw materials inside the grinding apparatuses, without adding water or other liquid substances.

In this way, the only humidity that may be present during the grinding step is that intrinsically contained in the ceramic raw materials.

In order to obtain the above-mentioned humidity values, it is preferable that the ceramic raw materials are already sufficiently dry before subjecting them to the dry grinding (micronization) step.

In the presence of significant humidity in the raw materials, it is possible to include a step of drying the ceramic raw materials, to be carried out before the dry grinding step, for example through natural drying methods (solar evaporation) or forced drying through dryers.

In the presence of raw materials with low/medium plasticity and a modest humidity content, it is also possible to install heating systems, such as burners and/or heat recovery systems, directly inside the grinding apparatuses, so as to allow simultaneous drying and grinding (micronization) of the aforementioned raw materials.

Optionally, one or more powder binders (for example boric acid, FP590, etc.), obtained at the end of the dry grinding step, may be subsequently added to the ceramic powder P preferably in quantities lower than 1% by weight, having the purpose of increasing the cohesion between the raw materials.

After the possible addition of the aforementioned powder binders, the ceramic powder P obtained at the end of the dry grinding (micronization) step is subjected to at least one wetting step with a liquid substance.

This wetting step can be achieved by mixing, preferably uniformly, a dosed and calibrated quantity of said liquid substance into the ceramic powder P.

The liquid substance may include water and possibly water-soluble binders and/or additives (e.g., CMC, starch, lignite, boric acid, SIL60, etc.), preferably in quantities lower than 1% by weight.

By means of the wetting step of the ceramic powder P, an agglomerate A is obtained, which generally has a higher humidity, and possibly a higher apparent density and/or an average larger particle size, than the initial ceramic powder P.

In particular, the humidity of the agglomerated product A obtained at the end of the wetting step may be comprised between 5% and 10% (extremes included).

The relative density of the agglomerated product A may be comprised between 0.45 and 0.85 g/cm$^3$ (extremes included).

As regards particle size, the agglomerated product A obtained at the end of the wetting step may include a quantity of particles having dimensions lower than 45 micrometres comprised between 30% and 60% (extremes included) of the total weight of the agglomerated product A.

Particles having dimensions comprised between 45 micrometres and 63 micrometres (extremes included) may be present in the agglomerated product A in a percentage by weight comprised between 5 % and 10% of its total weight (extremes included).

The agglomerated product A may also contain particles having dimensions higher than 100 micrometres in smaller but not entirely negligible quantities.

In particular, the agglomerated product A may contain a quantity of particles having dimensions comprised between 400 and 600 micrometres (extremes included) comprised between 7% and 15% of the total weight (extremes included).

In addition, the agglomerated product A may contain particles having dimensions greater than 600 micrometres in a quantity comprised between 8% and 28% of the total weight (extremes included).

Table 2 below shows an example of particle size distribution of the initial ceramic powder P and an example of particle size distribution of the agglomerated product A obtained after the wetting step:

Table 2

| Particle dimensions | % by weight in dry ground powder P | % by weight in the agglomerated product A |
|---|---|---|
| >2000 $\mu$m | 0 | 0.4 - 1 |
| 1400-2000 $\mu$m | 0 | 1 - 3 |
| 1250-1400 $\mu$m | 0 | 1 - 3 |
| 1000-1250 $\mu$m | 0 | 1 - 3 |
| 800-1000 $\mu$m | 0 | 2 - 5 |
| 600-800 $\mu$m | 0 | 3 - 8 |
| 500-600 $\mu$m | 0 | 2 - 5 |
| 400-500 $\mu$m | 0 - 1 | 5 - 10 |
| 315-400 $\mu$m | 0 - 2 | 0.2 - 1 |
| 250-315 $\mu$m | 0 - 4 | 7 - 13 |
| 200-250 $\mu$m | 0 - 5 | 3 - 8 |
| 150-200 $\mu$m | 0 - 15 | 2 - 5 |
| 100-150 $\mu$m | 0 - 25 | 5 - 10 |
| 63-100 $\mu$m | 0 - 40 | 6 - 12 |
| 45-63 $\mu$m | 1 - 15 | 5 - 10 |
| <45 $\mu$m | 50 - 99 | 30 - 60 |

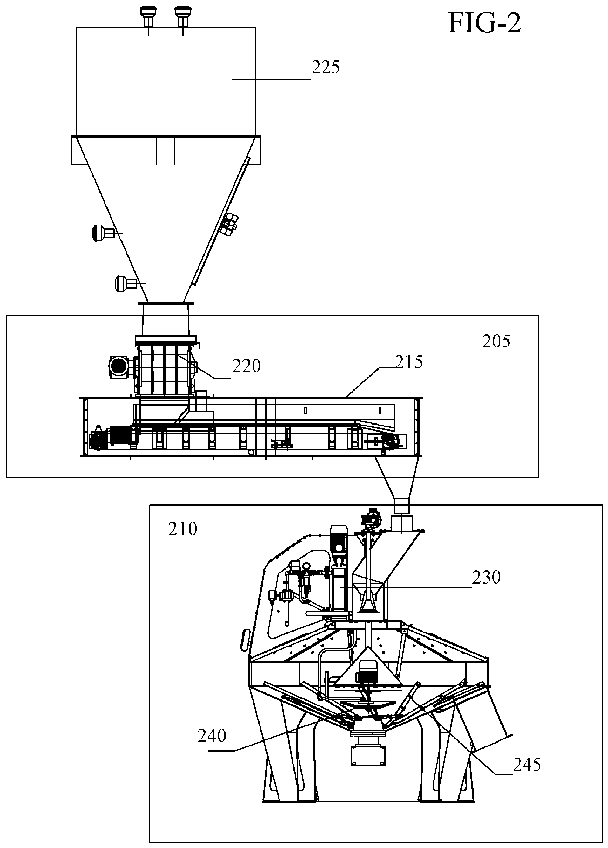

To perform the wetting step, the plant 100 may comprise an apparatus 200 for humidifying and densifying the ceramic powder P to obtain the agglomerated product A, a preferred embodiment of which is illustrated in Figure 2.

This humidification and densification apparatus 200 may comprise means for feeding 205 the ceramic powder P and a dosing device 210 for the calibrated dosing of the liquid substance to the ceramic powder P.

The feeding means 205 may comprise a weighing belt 215, which is adapted to receive ceramic powder P from a variable speed star extractor 220, placed for example at the outlet of a storage hopper 225, so as to convey a duly calibrated flow of said ceramic powder P to the dosing device 210.

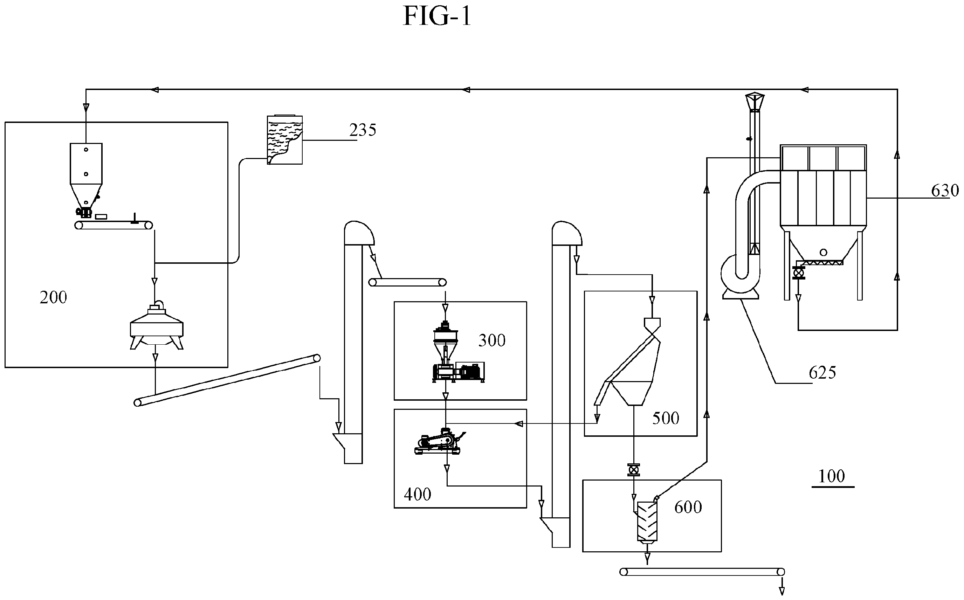

The dosing device 210 may comprise a multistage pump 230, which is adapted to withdraw the liquid substance from a tank 235 (see fig.1) and introduce it towards a series of superimposed discs 240 that distribute the sprayed liquid substance into the flow of ceramic powder P falling towards the bottom of the dosing device 210.

The ceramic powder thus humidified is then collected on the bottom of the dosing device 210, which preferably has a conical conformation with a vertical axis and concavity facing upwards, where it agglomerates giving rise to the agglomerated product A. Finally, the dosing device 210 comprises one or more scrapers 245, which may be placed on the inclined surface of the conical bottom and lead the agglomerated product A to discharge.

However, alternative means for feeding, for example by means of variable speed auger feeds, as well as alternative means for humidifying and densifying the ceramic powders, for example by means of vertical and/or horizontal wetting machines having a central shaft with vanes and/or tools for suspending the ceramic powder P and spraying systems by means of specific high-pressure nozzles, are not excluded.

Optionally, the agglomerated product A obtained at the end of the wetting step may be subjected to a further densification step, especially in the cases where the agglomerated ceramic powders have an apparent density lower than 0.6 g/cm$^3$.

The densification step can be carried out by using compacting rollers on a belt that are used at low pressure.

After this possible densification step, the agglomerated product A obtained at the end of the wetting step is subjected to a compaction step, during which the same is subjected to a certain compaction pressure, so as to obtain one or more compacted elements C (for example, but not necessarily one or more briquettes).

The compaction pressure that is applied to the agglomerated product A during this step may be lower than or equal to 400 Kg/cm$^2$, for example comprised between 100 and 400 Kg/cm$^2$ (extremes included).

Within this range, the compaction pressure may vary depending, for example, on the degree of cohesion of the raw materials, the particle size and apparent density characteristics of the ceramic powder P, and the quantity and characteristics of the liquid substance with which said ceramic powder P was wetted.

In particular, the quantity and characteristics of the aforesaid liquid substance (e.g. quantity and type of binders) should preferably be chosen and calibrated, during the previous wetting step, precisely so that the compaction pressure required to obtain the compacted elements C is lower than or equal to 400 Kg/cm$^2$.

In this way, the compaction step can be carried out by means of technical equipment and in a relatively simple way, which makes it particularly efficient and productive.

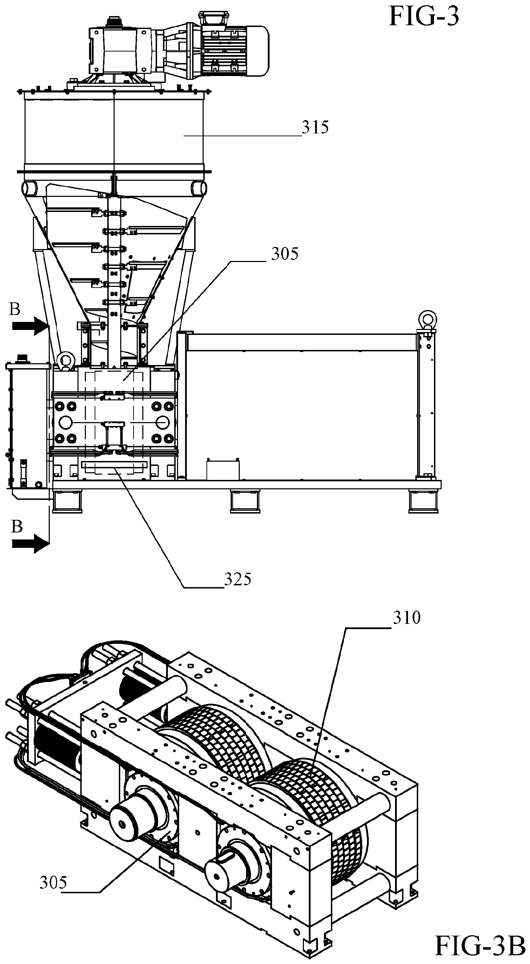

For example, to perform this compaction step, the plant 100 may comprise compaction means 300, a preferred embodiment of which is illustrated in Figure 3 and 3B.

Said embodiment provides two parallel and mutually counter-rotating pressure rollers 305, each of which has a side surface 310, generally cylindrical, which is flanked and opposed to the side surface 310 of the other roller 305.

The side surfaces 310 of the two rollers 305 may be shaped, so as to present a plurality of recesses (not visible) capable of substantially defining tiles.

The agglomerated product A is dispensed between the side surfaces 310 of the two rollers 305, for example by an auger hopper 315, so as to be compressed within said recesses and obtain the compacted elements C.

In other embodiments, however, the side surface 310 of the rollers 305 may be smooth or knurled.

The compaction means 300 may further be associated with a cleaning system 325 adapted to emit jets of compressed air on the side surface 310 of the rollers 305 to ensure cleaning thereof.

Finally, it is not excluded that, in other embodiments, the compaction means may comprise one or more compacting rollers placed on a belt, parallel compaction belts, compaction systems by means of rotating rollers placed on tables or tracks provided with a die, rotating tables or tracks provided with a die with fixed compaction rollers, mechanical or hydraulic presses provided with a mould.

Subsequently, the compacted elements C obtained as a result of the compaction step are subjected to a crushing step, during which they are crushed so as to obtain a ceramic granulate G with a predefined particle size.

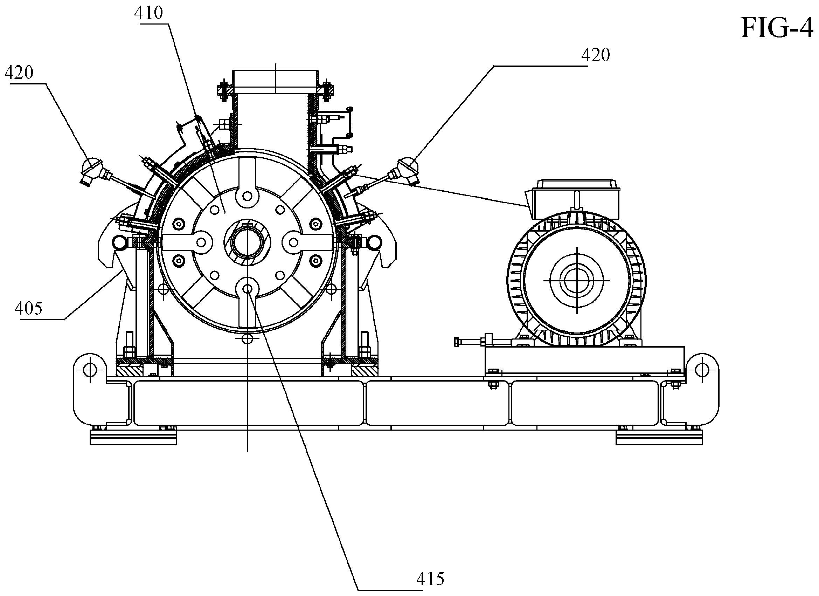

To perform this crushing step, the plant 100 may comprise crushing means 400, a preferred embodiment of which is illustrated in Figure 4.

The crushing means 400 according to this embodiment may comprise at least one hammer mill, by means of which the compacted elements C are crushed to a desired particle size.

The hammer mill generally comprises an outer casing 405, within which a rotatable rotor 410 is housed to which articulated hammers 415 are associated that are adapted to contact and crush the compacted elements C.

The hammers 415 may have various conformations and shape and the rotor 410 may be provided with clockwise or counterclockwise rotation.

However, it is not excluded that, in other embodiments, the crushing means 400 may include other types of mills, such as disc mills, opposing roller mills or peg mills.

In order to avoid clogging of the crushing means 400, caused by the humidity in the compacted elements C, the process may also comprise a step of heating thereof.

This heating step may be performed by providing the crushing means 400 with a heating system 420 adapted to heat the outer casing 405 of the mill, for example of the mill illustrated in Figure 4 or any of the other mills mentioned above.

This heating system 420 may comprise, for example, electrical resistances applied to said outer housing 405.

However, it is not excluded that, in other embodiments, the aforesaid heating step may be obtained with other means, for example by introducing hot air inside the mill or by introducing hot air, liquids and/or oils in a suitable cavity between the outer casing 405 and an inner casing.

After the crushing step, the process comprises subjecting the granulate G thus obtained to a sieving step with a sieve, so as to separate therefrom coarse granules S1 having dimensions greater than a first predetermined value. This first value may be for example but not necessarily equal to 800 micrometres.

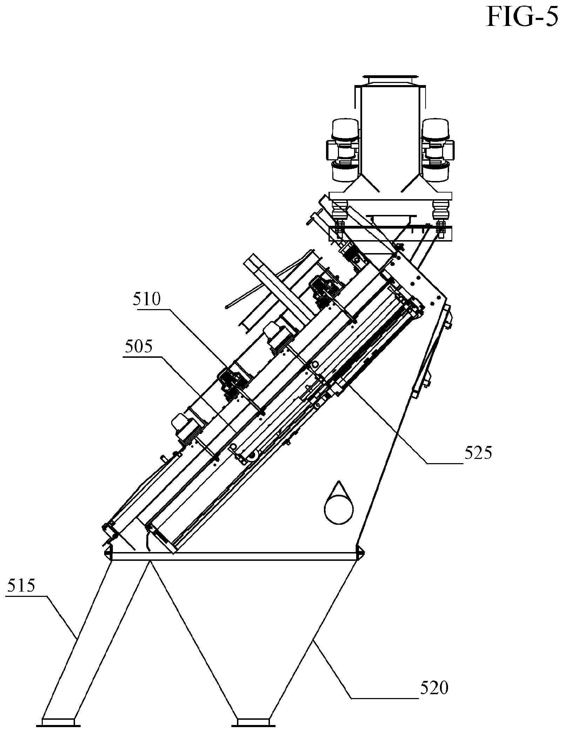

To perform this sieving step, the plant 100 comprises sieving means 500, a preferred embodiment of which is illustrated in Figure 5.

Such sieving means 500 may comprise a sieve provided with a sieving mesh 505, preferably but not exclusively made of stainless steel, and possibly with a vibrating device 510 suitable for vibrating the sieving mesh 505, preferably but not necessarily at an adjustable frequency and intensity.

The sieving mesh 505 may be oriented at an angle with respect to a hypothetical horizontal plane.

The vibrating device 510 may comprise one or more electromagnets mechanically connected to the sieving mesh 505, either directly or indirectly.

The granulate G is poured above the sieving mesh 505, so that the coarse granules S1, not being able to pass, flow on the sieving mesh 505 towards a first discharge mouth 515, while the finer granulate V, crossing the sieving mesh 505, reaches a second and distinct discharge mouth 520.

In order to avoid clogging of the sieving mesh 505, caused by the humidity in the granulate G, the sieving mesh 505 can also be heated by means of a suitable heating system, for example by means of electrical resistances fixed in a heat exchange relationship with the sieving mesh 505.

The sieving mesh 505 may further be provided with a cleaning device 525, comprising for example one or more brushes, which may be operated in a timed manner so as to clean the sieving mesh 505 of material residue.

In general, the sieving means 500 may however comprise any other type of sieve, including for example circular sieves, inclined sieves with vibrators and/or electromagnets placed laterally, anteriorly or posteriorly which directly or indirectly stress the sieving mesh, tumbler sieves, rotary sieves.

In any case, the granulate V that pass through the sieving mesh 505 (reaching, for example, the second discharge mouth 520) will be made up only of granules having dimensions smaller than the set value (and defined by the mesh dimensions of the sieving mesh), while the granules that are separated and retained by the sieving mesh (reaching, for example, the first discharge mouth 515) represent the coarse granules S1.

These coarse granules S1 may possibly be recovered and conveyed back to the crushing step, for example by feeding them to the inlet of the crushing means 400 together with the compacted elements C coming from the compaction step, so as to reduce production waste.

After this sieving step, the sieved ceramic granulate V (i.e., the one purged of coarse granules S1) is further subjected to an inertial separation step, so as to separate therefrom fine particles S2 having dimensions smaller than a second predetermined value.

Of course, this second value is preferably lower than the first value used in the sieving step.

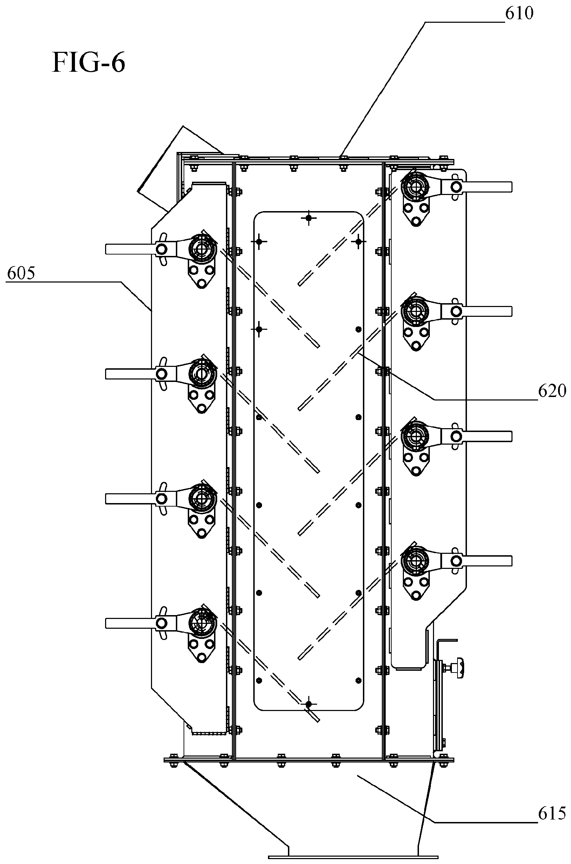

By way of non-limiting example, the second value may be equal to 100 micrometres. To perform this inertial separation step, the plant 100 comprises separation means 600, a preferred embodiment of which is illustrated in Figure 6.

These separation means 600 comprise a multiple cross-flow inertial separation device, which comprises an outer casing 605 within which the sieved ceramic granulate V flows by gravity, from top to bottom, from an inlet mouth 610 to an outlet mouth 615.

A plurality of chutes 620, preferably having an adjustable inclination, are arranged inside the casing 605, which are arranged alternately and distributed substantially in a herringbone pattern along the direction of descent of the sieved ceramic granulate V. At the same time, an air current is created inside the casing, flowing from the bottom to the top, hitting in counter-current the sieved ceramic granulate V that flows down along the chutes 620.

This air current can be generated by a suitable suction device 625 (see fig.1).

In this way, the larger and heavier granules of the sieved granulate V continue to fall along the separation device, reaching the outlet mouth 615, while the smaller and lighter granules are dragged upwards by the air current and transported by the latter inside a tank 630 associated with the suction device 625.

The ceramic granulate that reaches and flows out of the outlet mouth 615 represents the finished granulate GF.

The inertial separation device can vary in the number of stages, the angle of the curves, the internal speeds and the air/product ratio, in order to be able to adjust the percentage of residual fine particles (having dimensions lower than the second predetermined value) in the finished granulate GF.

However, it is not excluded that, as an alternative to the device illustrated in Figure 6, separation means 600 of other embodiments may comprise other types of inertial separators, for example pneumatic type separators, cyclonic type separators, gravity type separators or pneumatic vibrated fluidised bed type separators.

In any case, the fine granules S2 that are separated during the inertial separation step (and that accumulate, for example, in the tank 630) can be recovered and conveyed back to the wetting step, for example by previously combining them to the ceramic powder P at the inlet of the humidification and densification apparatus 200, thereby further reducing production waste.

As mentioned above, the ceramic granulate GF, also purged of fine granules S2, constitutes the finished ceramic granulate and is generally characterised by low air content, high flowability, homogeneous humidity, a narrow particle size and a low percentage of fine particles.

It should be here noted that although reference was made in the foregoing discussion to an inertial separation step following the sieving step, in other embodiments, the inertial separation step could be performed prior to the sieving step.

It is also not excluded that certain embodiments may involve only the sieving step or only the inertial separation step or possibly neither of them.

In any case, it is preferable that the finished ceramic granulate GF (i.e. obtained from the crushing step preferably followed by the sieving step and/or by the inertial separation step) may have at least one of (preferably more than one or all of) the following characteristics:

- a humidity comprised between 5% and 10% (extremes included),
- a compression ratio comprised between 1.8 and 2.1 (including extremes),
- an apparent density comprised between 0.85 and 1.1 g/cm$^3$ (extremes included),
- a quantity of particles having dimensions lower than or equal to 100 micrometres lower than or equal to 10% of the total weight of the finished ceramic granulate GF,
- a quantity of particles having dimensions greater than or equal to 600 micrometres lower than or equal to 20% of the total weight of the finished ceramic granulate GF,
- an angle of repose comprised between 30° and 40° sexagesimal (extremes included). It should be here specified that the angle of repose of a granular material provides a measure of its fluidity, i.e. its flowability. The angle of repose is measured by loading a sample of the granular material inside a funnel, from which it is made to flow onto a flat surface. In this way, the granular material will accumulate on the flat surface forming a cone. The angle of repose is the angle at the base of this cone and will generally be greater the lower the fluidity of the granular material.

The compression ratio is the ratio between the apparent volume of the granulate and the apparent volume of the compacted material obtained after the pressing step.

The above mentioned characteristics of ceramic granulate GF are summarized in Table 3 below:

Table 3

|  | Granulate according to the invention |
| --- | --- |
| Compression ratio | 1.8 - 2.1 |
| Density (g/cm$^3$) | 0.85 - 1.1 |
| Angle of repose | 30° - 40° |
| Humidity % | 5 - 8 |

An example of particle size distribution of ceramic granulate GF is shown in detail in Table 4 below:

Table 4

| Particle dimensions | % by weight in the granulate according to the invention |
| --- | --- |
| >1000 μm | 0 - 0.5 |
| 800-1000 μm | 0 - 5 |
| 600-800 μm | 5 - 15 |
| 500-600 μm | 10 - 20 |
| 400-500 μm | 18 - 28 |
| 31 5-400 μm | 5 - 10 |
| 250-31 5 μm | 18 - 28 |
| 200-250 μm | 7 - 17 |
| 150-200 μm | 3 - 9 |
| 100-150 μm | 3 - 9 |
| 63-100 μm | 2 - 6 |
| <63 μm | 1 - 5 |

A more specific example of ceramic granulate GF, obtainable from the above process, may have at least one of (preferably more than one or all of) the following characteristics:

- a humidity equal to 6%,

- a compression ratio equal to 1.95,
- an apparent density equal to 0.98 g/cm$^3$,
- a percentage of fine particles lower than or equal to 100 micrometres equal to 6% of the total weight of the ceramic granulate GF,
- a percentage of granules higher than or equal to 600 micrometres equal to 10% of the total weight of the ceramic granulate GF, and
- an angle of repose equal to 35°.

These data are also shown comparatively in Tables 5 and 6 below:

Table 5

|  | Granulate according to the invention | Dry granulate EP 3 402 590 A1 | Atomized |
|---|---|---|---|
| Compression ratio | 1.95 | 1.8 | 2 |
| Density (g/cm$^3$) | 0.98 | 1.1 | 0.95 |
| Angle of repose | 35° | 45° | 33° |
| Humidity % | 6.0 | 6.5 | 6.0 |

Table 6

| Particle dimension | % by weight in the granulate according to the invention | % by weight in the dry granulate EP 3 402 590 A1 | % by weight in an atomized |
|---|---|---|---|
| >1000 $\mu$m | Traces | 0.5 | 0.3 |
| 800-1000 $\mu$m | 0.1 | 15.9 | 0.3 |
| 600-800 $\mu$m | 6.1 | 30.7 | 4.3 |
| 500-600 $\mu$m | 15.5 | 10.8 | 9.8 |
| 400-500 $\mu$m | 23.7 | 11.4 | 23.4 |
| 315-400 $\mu$m | 6.5 | 3.9 | 7.7 |
| 250-315 $\mu$m | 22.5 | 7.5 | 25.6 |
| 200-250 $\mu$m | 10.8 | 3.2 | 12.6 |
| 150-200 $\mu$m | 5.3 | 2.5 | 7.2 |
| 100-150 $\mu$m | 4.3 | 1.7 | 5.1 |
| 63-100 $\mu$m | 2.4 | 1.9 | 1.7 |
| <63 $\mu$m | 3.6 | 10 | 2.0 |

In particular, Table 5 shows the values of the compression ratio, apparent density, angle of repose and humidity of the example of ceramic granulate GF obtainable by the above process, comparing them with those relating to a granulate obtained by means of the dry process described in EP 3 402 590 A1 and with those relating to an atomized one obtained by wet grinding.

Table 6 shows the particle size distribution of the example of granulate GF obtained with the process outlined above, comparing it with the particle size distribution of the granulate obtained by means of the dry process described in EP 3 402 590 A1 and with that of the atomized one obtained by wet grinding.

As mentioned in the introduction, the ceramic granulate GF, obtainable with the process and the plant 100 outlined above, can be effectively used for manufacturing any ceramic product.

In general, this manufacture involves subjecting the ceramic granulate GF to a forming step, for example by pressing, extrusion, casting or other processes, so as to form a semi-finished product having a certain geometrical shape.

In particular, forming by pressing can be carried out inside a traditional mould (discontinuous pressing) or above a sliding belt with or without a mould (continuous or semi-continuous pressing).

After possible decoration steps, the semi-finished product obtained after the pressing step is subjected to a high-temperature firing step that transforms the raw materials of the granulate into new crystalline and/or glassy compounds, giving the product thus obtained particular chemical/physical properties, including the solidity and mechanical resistance necessary to maintain its shape.

In this specific type of applications, the ceramic granulate GF of the invention overcomes the characteristics of the granulates obtainable with known wet and dry granulation systems, guaranteeing a humidity, a particle size distribution and an apparent density completely similar to that of atomized powders as can be verified in Tables 5 and 6. In addition, the particularly narrow particle size and the content of fine particles limit the classic phenomena of segregation of the powders that can be observed with the products obtained through the wet and dry granulation technologies of the known type. These characteristics make the granulate GF obtained with the process outlined above a solution that fully meets the demands of the ceramic market for the production of large-size formats even with the use of mouldless pressing systems and high energy efficiency.

It should be here pointed out that the particle sizes of the materials mentioned in the previous discussion refer to the materials as obtained from the respective process steps, without them undergoing any drying step preparatory to the measurement of the particle size.

In other words, the particle size of each material is measured by preparing a certain quantity of material without drying it, for example 100 grams of undried material, and by passing it through a series of sieves by falling with different, increasingly smaller mesh sizes.

These sieves are set in vibration until no more material passes through the holes in the mesh from each sieve, after which the quantity of material retained by each sieve can be weighed and placed in percentage relation to the quantity of the initial material. Obviously, a technician in the sector can make numerous modifications of a technical application nature to everything described above, without thereby departing from the scope of the invention as claimed below.

**Claims**

1.  A process for preparing a ceramic granulate, comprising at least:

    - a step of dry grinding ceramic raw materials to obtain a ceramic powder (P),
    - a step of wetting said ceramic powder (P) with at least one liquid substance to obtain an agglomerated product (A),
    - a step of compacting said agglomerated product (A) by applying a compaction pressure to obtain at least one compacted element (C),
    - a step of crushing said compacted element (C) to obtain the ceramic granulate (G).
    - a step of sieving with a sieve the ceramic granulate (G) to separate the coarse particles (S1) therefrom,
    - a step of inertial separation of the ceramic granulate (V) to separate the fine particles (S2) therefrom.

2.  The process according to claim 1, wherein the ceramic raw materials comprise at least one clay component or a plurality of clay components having a different mineralogical constitution.

3.  The process according to any one of the preceding claims, wherein the ceramic powder (P) obtained from the grinding step possesses one or more of the following characteristics as measured as in the description:

    - having a humidity lower than or equal to 5%,
    - having an apparent density comprised between 0.4 and 0.8 g/cm$^3$,
    - including a quantity of particles having dimensions lower than 45 micrometres greater than or equal to 50% of the total weight of the ceramic powder (P), and
    - including a quantity of particles having dimensions higher than 400 micrometres lower than or equal to 1% of the total weight of the ceramic powder (P).

4.  The process according to any one of the preceding claims, wherein the liquid substance used in the wetting step includes water and possibly water-soluble binders and/or additives.

5.  The process according to any one of the preceding claims, wherein the agglomerated product (A) obtained by the wetting step possesses one or more of the following characteristics as measured as in the description:

    - having a humidity comprised between 5% and 10%,
    - having an apparent density comprised between 0.45 and 0.85 g/cm$^3$,
    - including a quantity of particles having dimensions lower than 45 micrometres comprised between 30% and 60% of the total weight of the agglomerated product (A),
- including a quantity of particles having dimensions higher than 400 micrometres comprised between 15% and 43% of the total weight of the agglomerated product (A).

6. The process according to any one of the preceding claims, wherein said compaction pressure is lower than or equal to 400 Kg/cm$^2$.

7. The process according to any one of the preceding claims, comprising at least one step of reconveying the coarse particles (S1) to the crushing step.

8. The process according to any one of the preceding claims, comprising at least one step of reconveying the fine particles (S2) to the wetting step.

9. The process according to any one of the preceding claims, wherein said ceramic granulate (GF) possesses one or more of the following characteristics as measured as in the description:

- having a humidity comprised between 5% and 10%,
- having a compression ratio comprised between 1,8 and 2,1,
- having an apparent density comprised between 0.85 and 1.1 g/cm3,
- including a quantity of particles having dimensions lower than or equal to 100 micrometres lower than or equal to 10% of the total weight of the ceramic granulate (GF),
- including a quantity of particles having dimensions greater than or equal to 600 micrometres lower than or equal to 20% of the total weight of the ceramic granulate (GF),
- having an angle of repose comprised between 30° and 40° sexagesimal.

10. A plant (100) for preparing a ceramic granulate (GF), comprising:

- means for dry grinding ceramic raw materials to obtain a ceramic powder (P),
- means for wetting said ceramic powder (P) with at least one liquid substance to obtain an agglomerated product (A),
- means for compacting said agglomerated product (A) by applying a compaction pressure to obtain at least one compacted element (C),
- means for crushing said compacted element (C) to obtain ceramic granulate (G).
- a sieve for sieving the ceramic granulate (G) to separate coarse particles (S1) therefrom.
- means for inertial separation of ceramic granulate (V) to separate fine particles (S2) therefrom.

## Patentansprüche

1. Verfahren zum Zubereiten eines keramischen Granulats, zumindest Folgendes umfassend:

- einen Schritt des Trockenmahlens keramischer Rohmaterialien, um ein keramisches Pulver (P) zu gewinnen,
- einen Schritt des Befeuchtens des keramischen Pulvers (P) mit mindestens einer flüssigen Substanz, um ein agglomeriertes Produkt (A) zu gewinnen,
- einen Schritt des Verdichtens des agglomerierten Produkts (A) durch Anwenden eines Verdichtungsdrucks, um mindestens ein verdichtetes Element (C) zu gewinnen,
- einen Schritt des Zerkleinerns des verdichteten Elements (C), um das keramische Granulat (G) zu gewinnen,
- einen Schritt des Siebens des keramischen Granulats (G) mit einem Sieb, um grobe Partikel (S1) davon zu separieren,
- einen Schritt der Trägheitsseparation des keramischen Granulats (V), um die feinen Partikel (S2) davon zu separieren.

2. Verfahren nach Anspruch 1, wobei die keramischen Rohmaterialien mindestens eine Tonkomponente oder mehrere Tonkomponenten mit unterschiedlicher mineralogischer Struktur umfassen.

3. Verfahren nach einem der vorhergehenden Ansprüche, wobei das keramische Pulver (P), das in dem Mahlschritt gewonnen wird, eine oder mehrere der folgenden Eigenschaften, wie in der Beschreibung gemessen, aufweist:

- eine Feuchtigkeit von weniger als oder gleich 5 %,
- eine scheinbare Dichte zwischen 0,4 und 0,8 g/cm$^3$,
zu 50 % des Gesamtgewichts des keramischen Pulvers (P) oder mehr eine Menge an Partikeln mit Abmessungen von weniger als 45 Mikrometer enthaltend und
- zu 1 % des Gesamtgewichts des keramischen Pulvers (P) oder weniger eine Menge an Partikeln mit Abmessungen von mehr als 400 Mikrometer enthaltend.

4. Verfahren nach einem der vorhergehenden Ansprüche, wobei die flüssige Substanz, die in dem Befeuchtungsschritt verwendet wird, Wasser und möglicherweise wasserlösliche Bindemittel und/oder Additive enthält.

5. Verfahren nach einem der vorhergehenden Ansprüche, wobei das agglomerierte Produkt (A), das durch den Befeuchtungsschritt gewonnen wird, eine oder mehrere der folgenden Eigenschaften, wie in der Beschreibung gemessen, aufweist:

- eine Feuchtigkeit zwischen 5 % und 10 %,
- eine scheinbare Dichte zwischen 0,45 und 0,85 g/cm$^3$,
zu 30 % bis 60 % des Gesamtgewichts des agglomerierten Produkts (A) eine Menge an Partikeln mit Abmessungen von weniger als 45 Mikrometer enthaltend und
- zu 15 % bis 43 % des Gesamtgewichts des agglomerierten Produkts (A) eine Menge an Partikeln mit Abmessungen von mehr als 400 Mikrometer enthaltend.

6. Verfahren nach einem der vorhergehenden Ansprüche, wobei der Verdichtungsdruck geringer als oder gleich 400 kg/cm$^2$ ist.

7. Verfahren nach einem der vorhergehenden Ansprüche, mindestens einen Schritt des Zurückbeförderns der groben Partikel (S1) zu dem Zerkleinerungsschritt umfassend.

8. Verfahren nach einem der vorhergehenden Ansprüche, mindestens einen Schritt des Zurückbeförderns der feinen Partikel (S2) zu dem Befeuchtungsschritt umfassend.

9. Verfahren nach einem der vorhergehenden Ansprüche, wobei das keramische Granulat (GF) eine oder mehrere der folgenden Eigenschaften, wie in der Beschreibung gemessen, aufweist:

- eine Feuchtigkeit zwischen 5 % und 10 %,
- ein Verdichtungsverhältnis zwischen 1,8 und 2,1,
- eine scheinbare Dichte zwischen 0,85 und 1,1 g/cm$^3$,
zu 10 % des Gesamtgewichts des keramischen Granulats (GF) oder weniger eine Menge an Partikeln mit Abmessungen von 100 Mikrometer oder weniger enthaltend und
- zu 20 % des Gesamtgewichts des keramischen Granulats (GF) oder mehr eine Menge an Partikeln mit Abmessungen von 600 Mikrometer oder mehr enthaltend,
- einen Schüttwinkel zwischen 30° und 40° sexagesimal.

10. Anlage (100) zum Zubereiten eines keramischen Granulats (GF), Folgendes umfassend:

- Mittel zum Mahlen keramischer Rohmaterialien, um ein keramisches Pulver (P) zu gewinnen,
- Mittel zum Befeuchten des keramischen Pulvers (P) mit mindestens einer flüssigen Substanz, um ein agglomeriertes Produkt (A) zu gewinnen,
- Mittel zum Verdichten des agglomerierten Produkts (A) durch Anwenden eines Verdichtungsdrucks, um mindestens ein verdichtetes Element (C) zu gewinnen,
- Mittel zum Zerkleinern des verdichteten Elements (C), um das keramische Granulat (G) zu gewinnen,
- ein Sieb zum Sieben des keramischen Granulats (G), um grobe Partikel (S1) davon zu separieren,
- Mittel zur Trägheitsseparation des keramischen Granulats (V), um die feinen Partikel (S2) davon zu separieren.

**Revendications**

1. Procédé de préparation d'un granulé céramique, comprenant au moins :

- une étape de meulage à sec des matières premières céramiques afin d'obtenir une poudre céramique (P),
- une étape d'humidification de ladite poudre céramique (P) avec au moins une substance liquide afin d'obtenir un produit aggloméré (A),
- une étape de compactage dudit produit aggloméré (A) par l'application d'une pression de compactage afin d'obtenir au moins un élément compacté (C),
- une étape de concassage dudit élément compacté (C) afin d'obtenir le granulé céramique (G),
- une étape de tamisage à l'aide d'un tamis des granulés céramiques (G) pour en séparer les grosses particules (S1),
- une étape de séparation inertielle du granulé céramique (V) pour en séparer les particules fines (S2).

2. Procédé selon la revendication 1, dans lequel les matières premières céramiques comprennent au moins un composant d'argile ou plusieurs composants d'argile ayant une constitution minéralogique différente.

3. Procédé selon l'une quelconque des revendications précédentes, dans lequel la poudre céramique (P) obtenue à l'issue de l'étape de meulage possède une ou plusieurs des caractéristiques suivantes, telles que mesurées dans la description :

   - un taux d'humidité inférieur ou égal à 5 %,
   - une densité apparente comprise entre 0,4 et 0,8 g/cm$^3$,
   - une quantité de particules ayant des dimensions inférieures à 45 micromètres supérieure ou égale à 50 % du poids total de la poudre céramique (P), et
   - une quantité de particules ayant des dimensions supérieures à 400 micromètres inférieure ou égale à 1 % du poids total de la poudre céramique (P).

4. Procédé selon l'une quelconque des revendications précédentes, dans lequel la substance liquide utilisée dans l'étape d'humidification comprend de l'eau et éventuellement des liants et/ou des additifs solubles dans l'eau.

5. Procédé selon l'une quelconque des revendications précédentes, dans lequel le produit aggloméré (A) obtenu à l'issue de l'étape d'humidification possède une ou plusieurs des caractéristiques suivantes, telles que mesurées dans la description :

   - une humidité comprise entre 5% et 10%,
   - une densité apparente comprise entre 0,45 et 0,85 g/cm$^3$,
   - une quantité de particules ayant des dimensions inférieures à 45 micromètres comprise entre 30% et 60% du poids total du produit aggloméré (A),
   - une quantité de particules ayant des dimensions supérieures à 400 micromètres comprise entre 15% et 43% du poids total du produit aggloméré (A).

6. Procédé selon l'une des revendications précédentes, dans lequel ladite pression de compactage est inférieure ou égale à 400 Kg/cm$^2$.

7. Procédé selon l'une quelconque des revendications précédentes, comprenant au moins une étape de réacheminement des grosses particules (S1) vers l'étape de concassage.

8. Procédé selon l'une quelconque des revendications précédentes, comprenant au moins une étape de réacheminement des particules fines (S2) vers l'étape d'humidification.

9. Procédé selon l'une quelconque des revendications précédentes, dans lequel ledit granulé céramique (GF) possède une ou plusieurs des caractéristiques suivantes, telles que mesurées dans la description :

   - une humidité comprise entre 5% et 10%,
   - un taux de compression compris entre 1,8 et 2,1,
   - une densité apparente comprise entre 0,85 et 1,1 g/cm$^3$,
   - une quantité de particules ayant des dimensions inférieures ou égales à 100 micromètres inférieure ou égale à 10 % du poids total du granulé céramique (GF),
   - une quantité de particules ayant des dimensions supérieures ou égales à 600 micromètres inférieure ou égale à 20 % du poids total du granulé céramique (GF),
   - un angle de repos compris entre 30° et 40° sexagésimaux.

**10.** Installation (100) destiné à la préparation d'un granulé céramique (GF), comprenant :

- des moyens de meulage à sec des matières premières céramiques afin d'obtenir une poudre céramique (P),
- des moyens d'humidification de ladite poudre céramique (P) avec au moins une substance liquide afin d'obtenir un produit aggloméré (A),
- des moyens de compactage dudit produit aggloméré (A) par l'application d'une pression de compactage afin d'obtenir au moins un élément compacté (C),
- des moyens de concassage dudit élément compacté (C) afin d'obtenir du granulé céramique (G),
- un tamis destiné au tamisage des granulés céramiques (G) pour en séparer les grosses particules (S1).
- des moyens de séparation inertielle du granulé céramique (V) pour en séparer les particules fines (S2).

# FIG-1

235

200

300

400

500

600

625

630

100

EP 4 305 003 B1

FIG-2

FIG-3

315

305

B

325

B

310

305

FIG-3B

FIG-4

420

415

410

420

405

FIG-5

510

505

525

515

520

FIG-6

EP 4 305 003 B1

FIG-7

P → [ 200 ] → A → [ 300 ] → C → [ 400 ] → G → [ 500 ] → V → [ 600 ] → GF

S1

S2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3402590 A1
- EP 3640227 A1